(19) Europäisches Patentamt
European Patent Office
Office européen des brevets

(11) EP 3 708 945 B1

(12) **EUROPÄISCHE PATENTSCHRIFT**

(45) Veröffentlichungstag und Bekanntmachung des Hinweises auf die Patenterteilung:
**25.01.2023   Patentblatt 2023/04**

(21) Anmeldenummer: **19162769.4**

(22) Anmeldetag: **14.03.2019**

(51) Internationale Patentklassifikation (IPC):
**G01B 21/04** (2006.01)

(52) Gemeinsame Patentklassifikation (CPC):
G01B 11/005; **G01B 21/04**

(54) **AUSWERTUNG VON MESSDATEN AUS EINER VERMESSUNG EINER MEHRZAHL VON WERKSTÜCKEN**

EVALUATION OF MEASUREMENT DATA FROM A MEASUREMENT OF A PLURALITY OF WORKPIECES

ÉVALUATION DES DONNÉES DE MESURE D'UNE MESURE D'UNE PLURALITÉ DE PIÈCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.09.2020   Patentblatt 2020/38**

(73) Patentinhaber: **Carl Zeiss Industrielle Messtechnik GmbH
73447 Oberkochen (DE)**

(72) Erfinder:
• **RÜGER, Oliver
01217 Dresden (DE)**
• **GÖRSCH, Daniel
01277 Dresden (DE)**

(74) Vertreter: **Patentanwälte Bressel und Partner mbB
Potsdamer Platz 10
10785 Berlin (DE)**

(56) Entgegenhaltungen:
**EP-A1- 1 679 486     US-A1- 2011 054 835**

• **DANA EFSTATE ET AL: "Correlation of CMM Data with Flexible Fixturing", SAE TECHNICAL PAPER SERIES, Bd. 1, 16. Oktober 2001 (2001-10-16), XP055610604, US ISSN: 0148-7191, DOI: 10.4271/2001-01-3066**

**Beschreibung**

Die Erfindung betrifft ein Verfahren und eine Vorrichtung zur Auswertung von Messdaten aus einer Vermessung einer Mehrzahl von Werkstücken.

Bezüglich der Produktion oder sonstigen Bearbeitung von Werkstücken ist es bekannt, die Qualität der hergestellten/bearbeiteten Werkstücke zu überprüfen. Dabei kann an vordefinierten Stellen der Werkstücke, z.B. in einem Koordinatensystem des Werkstücks oder des Messgeräts, eine Messung von Koordinaten stattfinden. In diesem Beschreibungstext werden die vordefinierten Stellen unter den Begriff "Messpunkt" subsummiert. Häufig werden Messpunkte anhand einer Soll-Form vorgegeben und somit z.B. in einem Koordinatensystem der Soll-Form definiert. Die Soll-Form kann insbesondere durch ein CAD (Computer Aided Design)- Modell definiert sein. Messpunkte können z.B. aber auch jeweils anhand des konkret zu vermessenden Werkstücks definiert werden. Wenn das Werkstück eine charakteristische Form hat, kann relativ dazu der jeweilige Messpunkt definiert sein. Beispiele dafür sind Messpunkte am Boden einer Bohrung oder die Endpunkte eines erhabenen Bereichs oder Vorsprungs.

An dem Messpunkt kann zumindest eine Koordinate gemessen werden, d.h. ihr Wert ermittelt werden. Wenn Informationen über eine Soll-Form vorhanden sind, kann die gemessene Koordinate mit der entsprechenden Koordinate der Soll-Form verglichen werden und z.B. die Differenz und/oder Abweichung der Koordinaten oder, im zweidimensionalen oder dreidimensionalen Fall, alternativ oder zusätzlich die Differenz und/oder Abweichung zum entsprechenden Punkt der Soll-Form ermittelt werden.

Es ist möglich, die Abweichungen zur Soll-Form oder zum erwarteten Wert für eine Vielzahl von Messpunkten grafisch darzustellen. Z.B. durch Farbkodierung kann dargestellt werden, ob und zu welchem Grad der Messwert oder Satz von Messwerten mit dem Soll-Wert oder dem Satz von Soll-Werten übereinstimmt bzw. davon abweicht.

Häufig werden mehrere Werkstücke derselben Art oder mit vergleichbaren Formmerkmalen vermessen. Wenn die Werkstücke nacheinander oder zumindest teilweise zu unterschiedlichen Zeitpunkten hergestellt oder bearbeitet wurden, dann kann in Bezug auf die entsprechenden Messdaten von einer Historie der Messdaten gesprochen werden. Im allgemeinen Fall der Vermessung einer Mehrzahl von Werkstücken wird für jedes der Werkstücke ein Satz von Messdaten erhalten und ist somit dem jeweiligen Werkstück zugeordnet, wobei der Satz von Messdaten einer Mehrzahl von Messpunkten des Werkstücks entspricht. Anders ausgedrückt enthält jeder Satz von Messdaten Messinformationen zu den verschiedenen gemessenen Messpunkten des Werkstücks. Die Sätze von Messdaten können jeweils so strukturiert und/oder geordnet sein, dass Messinformationen in den verschiedenen Sätzen, die zu einander entsprechenden Messpunkten gehören, identifizierbar und somit auch miteinander vergleichbar sind. Der Satz von Messdaten eines jeden Werkstücks weist somit zu jedem Messpunkt der Werkstücke zumindest eine gemessene Koordinate und/oder für jede gemessene Koordinate eine Abweichung zu einer Vergleichskoordinate auf.

In dem o.g. Fall der Farbkodierung von Abweichungen kann ein Betrachter z.B. die Farbentwicklung entsprechend der Historie der Messdaten wahrnehmen und auf diese Weise erkennen, wann bzw. zu welchen Werkstücken wesentliche oder nicht akzeptable Abweichungen entstanden sind. Bei einer großen Anzahl von Messpunkten kann es vorkommen, dass die Farbentwicklung entsprechend der Historie der Herstellung/Bearbeitung in der Art eines ablaufenden Films mehrmals wiedergegeben werden muss, um alle wesentlichen Abweichungen zu erkennen und möglicherweise auch Zusammenhänge zwischen Abweichungen an verschiedenen Messpunkten zu erkennen.

EP 1 679 486 A1 beschreibt, dass Messwerte, welche von einem Koordinatenmessgerät erhalten werden, dafür bereitgestellt werden, dass Fehler in den Messwerten geschätzt werden. Basierend auf den geschätzten Fehlern wird eine Kovarianzmatrix oder Korrelationsmatrix der gemessenen Werte abgeleitet. Das beschriebene Verfahren dient der Schätzung von Ungenauigkeiten von Messgeräten. Die Korrelation der Messwerte jeweils zweier Messpunkte ist umso größer, je geringer der Abstand der zwei Messpunkte ist. Als Messobjekte werden z.B. stufenförmige Normale verwendet.

US 2011/0054835 A1 offenbart ein Verfahren zum Auswerten der Genauigkeit von Ausgangsdaten unter Verwendung von Fehlerfortpflanzung bei Koordinatenmessgeräten. Das Verfahren wird theoretisch in einer einfachen Berechnung mit einer kleinen Berechnungslast durchgeführt. Von einem Messobjekt werden mehrere Messpunkte vermessen. Es werden dann Ungenauigkeiten der Koordinaten der Messpunkte (Varianz) geschätzt. Zu den Unsicherheiten gehört auch diejenige aufgrund von Formabweichungen des Messobjekts.

Dana Efstate et al.: "Correlation of CMM Data with Flexible Fixturing", SAE Technical Paper Series, Bd. 1, 16.10.2001, XP 055610604, bezieht sich auf das Korrelieren von Daten, welche an mehreren Standorten mittels eines Koordinatenmessgeräts mit flexibler Fixierung der zu vermessenden Teile gesammelt werden. Es wird auf die Problematik eingegangen, dass Daten, die an verschiedenen Standorten aufgenommen wurden, nur dann verglichen werden können, wenn die Orientierung der Teile an den verschiedenen Standorten ähnlich ist. Ein wesentlicher Grund dafür ist die Schwerkraft.

Es ist eine Aufgabe der vorliegenden Erfindung, die Qualitätskontrolle bei der Herstellung und/oder Bearbeitung einer Mehrzahl von Werkstücken zu verbessern.

Es wird vorgeschlagen, jeweils für zumindest zwei Messpunkte eine Korrelation der gemessenen Koordinate(n) und/oder der Abweichung zu einem Vergleichswert zu bestimmen, und zwar über alle betrachteten Werkstücke. Für jedes betrachtete Werkstück, wobei die Betrachtung nicht bildlich zu verstehen ist, ist ein Satz von Messdaten der eingangs genannten Art vorhanden oder wird ermittelt. Aus den Sätzen von Messdaten kann somit jeweils für die zumindest zwei Messpunkte die zugehörige Messinformation derart verarbeitet werden, dass ein Maß der Korrelation erhalten wird. Das Maß der Korrelation enthält somit eine quantitative Aussage über den Grad des Zusammenhangs und/oder der Abhängigkeit der Messinformationen der zumindest zwei Messpunkte über alle betrachteten Werkstücke. Im Fall der Historie der Herstellung/Bearbeitung von Werkstücken wird somit eine Aussage über den Zusammenhang über den gesamten Zeitraum der Historie erhalten. Diese Aussage kann z.B. zusätzlich zu der oben beschriebenen Betrachtung des Ergebnisses einer Farbkodierung genutzt werden, um die Qualität zu überwachen. Es muss daher nicht oder nicht ausschließlich über den Umweg einer farbkodierten Darstellung ermittelt werden, ob sich im Laufe der Zeit Fehler bei der Herstellung/Bearbeitung in erheblicher Weise auf die Qualität ausgewirkt haben. Da die Bestimmung des Maßes der Korrelation jeweils in Bezug auf zumindest zwei Messpunkte vorzugsweise automatisch (z.B. unter Verwendung einer Datenverarbeitungs-Vorrichtung) durchgeführt wird, kann für eine Vielzahl von Kombinationen von Messpunkten jeweils ein Maß der Korrelation bestimmt werden. Somit ist eine automatisierte massenhafte Auswertung von Messpunkten möglich. Dies wiederum ermöglicht es, z.B. mittels eines optischen Vermessungssensors (wie z.B. einer Kamera oder eines Scanners) die Werkstücke jeweils bezüglich einer großen Anzahl von Messpunkten zu vermessen und dann die so entstandenen Messdatensätze auszuwerten. Die durch die Bestimmung des Maßes der Korrelation erreichte Quantifizierung bei der Auswertung ermöglicht zudem eine genauere Auswertung und/oder zuverlässigere Feststellung von Qualitätsmängeln.

Insbesondere wird vorgeschlagen: Ein Verfahren zur Auswertung von Messdaten aus einer Vermessung einer Mehrzahl von Werkstücken gemäß Anspruch 1.

Eine gemessene Koordinate bedeutet, dass bei der Messung ein Wert der Koordinate bestimmt wird/wurde.

Für jeden Messpunkt der Werkstücke, zu dem Messdaten in dem dem Werkstück zugeordneten Satz von Messdaten vorhanden sind, existiert daher ein Messwert für jede Koordinate des Messpunktes und/oder für jede gemessene Koordinate des Messpunktes eine Abweichung zu einer Vergleichskoordinate.

Bei den Werkstücken kann es sich um hinsichtlich ihrer Geometrie und insbesondere ihrer Soll-Geometrie vergleichbare und somit einander entsprechende Werkstücke handeln. Dies ist insbesondere dann der Fall, wenn zumindest ein Teilbereich der Mehrzahl von Werkstücken die gleiche Soll-Form hat. Die Messpunkte, denen die Sätze von Messdaten entsprechen, können daher zum Teil oder alle in dem Teilbereich der Werkstücke liegen, der die gleiche Soll-Form hat. Wenn nicht nur ein Teilbereich der Werkstücke die gleiche Soll-Form hat, sondern die Werkstücke insgesamt die gleiche Soll-Form haben, dann gibt es für jeden der Messpunkte eines Werkstücks einen entsprechenden Messpunkt jedes der anderen Werkstücke, der die gleiche Soll-Koordinate(n) hat. Die Soll-Form kann durch eine oder mehrere Koordinaten definiert sein. Daher kann insbesondere für jeden der Mehrzahl von Messpunkten, für den in dem Satz von Messdaten eines Werkstücks eine Messinformation enthalten ist, in jedem anderen Satz von Messdaten, der bei der Bestimmung des Maßes der Korrelation berücksichtigt wird, eine entsprechende Messinformation enthalten sein, die einem Messpunkt mit derselben Soll-Koordinate oder denselben Soll-Koordinaten zugeordnet ist. Bei der Messinformation handelt es sich um die zumindest eine gemessene Koordinate und/oder die Abweichung(en) für die gemessene Koordinate(n).

Insbesondere können vor der Bestimmung des Maßes der Korrelation aus den Sätzen von Messdaten Messinformationen zu Messpunkten entfernt werden, für die keine geometrisch vergleichbaren Messpunkte in allen Sätzen vorhanden sind. Geometrisch vergleichbar sind Messpunkte jedoch nicht nur dann, wenn sie derselben Soll-Koordinate oder denselben Soll-Koordinaten zugeordnet sind, wie im Folgenden noch genauer ausgeführt wird. Insbesondere kann bei geometrisch vergleichbaren Messpunkten verschiedener Werkstücke der Bezug der Messpunkte zueinander durch ein gemeinsames Koordinatensystem oder einander entsprechende Koordinatensysteme hergestellt werden oder bestehen. Zum Beispiel kann bei Werkstücken mit gleicher oder teilweise gleicher Soll-Form für jedes der Werkstücke ein Koordinatensystem definiert sein/werden, das insbesondere das Koordinatensystem der Soll-Form sein kann. Es ist jedoch auch möglich, dass das gemeinsame Koordinatensystem ein Koordinatensystem des Messgeräts zur Messung der Messpunkte und/oder ein Koordinatensystem der Bearbeitungsanlage zur Bearbeitung der Werkstücke ist. Wenn in einem solchen Koordinatensystem immer an derselben Stelle eine vorgegebene Art der Bearbeitung des Werkstücks durchgeführt wird (Beispiele werden unten noch genannt), dann sind die Punkte in dem Bearbeitungsbereich bei den verschiedenen Werkstücken miteinander vergleichbar.

Insbesondere wenn die Werkstücke geometrisch vergleichbar sind, dann können die Messpunkte der verschiedenen Werkstücke einander zugeordnet werden und haben insbesondere dieselbe Vergleichskoordinate (wenn eine Koordinate des Messpunktes gemessen wird/wurde) oder dieselben Vergleichskoordinaten (wenn eine Mehrzahl von Koordinaten des Messpunktes gemessen wird/wurde). Die Vergleichskoordinate(n) ist/sind insbesondere eine Koordinate bzw. Koordinaten der Soll-Form.

Es ist jedoch auch möglich, Sätze von Messdaten von Werkstücken hinsichtlich einer Korrelation auszuwerten, wenn die Werkstücke nicht zwangsläufig zumindest in einem Teilbereich die gleiche Soll-Form haben. Z.B. kann an verschiedenartigen Werkstücken in Bezug auf ein gemeinsames Koordinatensystem (z.B. das Koordinatensystem einer Produktionsanlage) eine Bearbeitung stattfinden. So kann z.B. an verschiedenen Stellen der verschiedenen Werkstücke eine gleichartige Bohrung eingebracht werden, eine gleichartige Verformung vorgenommen werden oder ein gleichgroßer Materialbereich aufgebracht werden. Die Messpunkte der verschiedenen Werkstücke an den Bearbeitungspositionen stehen somit dennoch aus geometrischen Gründen miteinander in Beziehung (d.h. entsprechen sich geometrisch) und es kann ein Maß für eine Korrelation der gemessenen Koordinaten und/oder der Abweichungen der Mehrzahl der Werkstücke durch Auswertung der entsprechenden Mehrzahl der Sätze von Messdaten sinnvoll bestimmt werden.

Bevorzugt wird daher, dass die Messpunkte in den verschiedenen Sätzen von Messdaten, die zur Bestimmung einer Korrelation als miteinander vergleichbar und/oder einander entsprechend angesehen werden, wie beispielsweise zuvor beschrieben geometrisch miteinander in Beziehung stehen.

Im Allgemeinen kann eine Beziehung zwischen Messpunkten verschiedener Werkstücke aber auch aus anderen als geometrischen Gründen bestehen und daher die Bestimmung des Maßes der Korrelation für zumindest ein Paar von Messpunkten sinnvoll sein. Die Beziehung kann z. B. logischer Art sein. Beispielsweise kann die Reihenfolge der Vermessung von Messpunkten des jeweiligen Werkstücks die Reihenfolge der Messdaten in dem dem Werkstück zugeordneten Satz von Messdaten festlegen. Zum Beispiel wäre der erste Messpunkt in jedem der Datensätze dann der zuerst gemessene Messpunkt des Werkstücks. Der zweite Messpunkt in jedem der Datensätze könnte dann der zweite gemessene Messpunkt des Werkstücks sein usw.. Aus der Korrelation eines Paars von Messpunkten kann dann eine Aussage über den Einfluss der Reihenfolge der Vermessung getroffen werden.

Die Bestimmung des Maßes der Korrelation betrifft wie oben ausgeführt eine Mehrzahl der Sätze von Messdaten und somit eine Mehrzahl von Werkstücken, denn jedem Werkstück ist ein Satz von Messdaten zugeordnet. Grundsätzlich kann eine Korrelation bereits bei zwei Sätzen von Messdaten und somit zwei Werkstücken bestimmt werden. In der Praxis ist es jedoch von Vorteil, die Sätze von Messdaten einer größeren Anzahl von Werkstücken hinsichtlich ihrer Korrelation auszuwerten. Durch die Korrelation, die sich wie oben ausgeführt jeweils auf ein Paar von Messpunkten bezieht, wird somit eine Aussage in Bezug auf das Paar von Messpunkten in jedem Satz der Mehrzahl der Sätze von Messdaten getroffen. Weichen z.B. die gemessenen Koordinaten an den Messpunkten des Paars von Messpunkten in jedem Satz von Messdaten in gleicher Weise von einem gemeinsamen Vergleichswert ab oder sind die gemessenen Koordinaten in jedem Satz von Messdaten gleich, ist die Korrelation maximal (z.B. 1). Variieren dagegen die Abweichungen oder die gemessenen Koordinaten des Paars von Messpunkten in den Sätzen von Messdaten, ist die Korrelation entsprechend kleiner. Die Abweichungen oder gemessenen Koordinaten können auch anti-korreliert sein. Dies wäre z.B. dann der Fall, wenn eine Zunahme der Abweichung zu der Vergleichskoordinate für den einen Messpunkt des Paars mit einer Abnahme der Abweichung zu der Vergleichskoordinate für den anderen Messpunkt des Paars korreliert.

Insbesondere kann das Maß der Korrelation einen Korrelationskoeffizienten aufweisen. Bei dem Maß der Korrelation kann es sich um ein Maß für den Grad des linearen Zusammenhangs zwischen den Messinformationen der einander entsprechenden Messpunkte in der Mehrzahl der Sätze von Messdaten handeln. Z.B. kann es sich um einen Pearson-Korrelationskoeffizienten handeln. Ein Maß für die Korrelation kann jedoch alternativ oder zusätzlich als Maß einer nicht linearen Korrelation bestimmt werden.

Beispielsweise kann ein Rangkorrelationskoeffizient bestimmt werden, z.B. nach Spearman oder nach Kendall. Insbesondere können als Maß für die Korrelation daher Zahlenwerte, z.B. nach Pearson im Bereich von -1 bis +1, oder Werte des Rangkorrelationskoeffizienten angegeben werden. Andere Arten der Bestimmung des Maßes der Korrelation sind nicht ausgeschlossen.

Gemäß den Ansprüchen wird das Maß der Korrelation jeweils für eine Mehrzahl von Paaren von Messpunkten bestimmt und werden Messpunkte, die Teil eines Paars von Messpunkten sind, dessen Maß der Korrelation eine vorgegebene Bedingung erfüllt, einander zugeordnet. Insbesondere können die einander zugeordneten Messpunkte auf zumindest eines der Werkstücke oder auf eine Soll-Form der Werkstücke bezogen sein.

Somit wird anhand des Maßes der Korrelation eine Zuordnung einer Mehrzahl von Messpunkten zueinander hergestellt. Die vorgegebene Bedingung kann insbesondere sein, dass das Maß der Korrelation in einem vorgegebenen oder anhand einer Vorgabe eindeutig ermittelbaren Wertebereich liegt. Auf diese Weise können die Messpunkte von Paaren von Messpunkten einander zugeordnet werden, die in gleicher oder ähnlicher Weise miteinander korreliert sind. Dies ermöglicht es zum Beispiel, hoch miteinander korrelierte oder antikorrelierte Messpunkte zu identifizieren. Optional ist es zusätzlich möglich, in ungefähr gleicher Weise (d. h. zu ungefähr gleichem Grad) korrelierte Paare von Messpunkten zu identifizieren. In diesen Fällen kann aus den identifizierten Messpunkten eine Erkenntnis abgeleitet werden, unter deren Berücksichtigung ein Prozess der Bearbeitung und/oder Vermessung zusätzlicher Werkstücke verändert werden kann Z. B. kann aus hoch korrelierten Messpunkten geschlossen werden, dass ein systematischer Zusammenhang der Bearbeitung bezüglich der beiden Messpunkte vorliegt (zum Beispiel wenn die Abweichung von einer Soll-Koordinate groß ist). Beispielsweise kann bei großer Abweichung von der Soll-Koordinate aus einer Korrelation eines ersten Messpunkts am Rand einer Bohrung zu einem zweiten Messpunkt an einer Wölbung eines (entsprechend der Soll-Vorgabe) ebenen Oberflächenbereichs in einer Entfernung zur Bohrung geschlossen werden, dass die Bohrung zu einer Verformung im Bereich des zweiten Messpunkt führt. Es kann aber auch in manchen Fällen zum Beispiel erwartet werden, dass Abweichungen zwischen gemessenen Koordinaten und der Soll-Form in einem bestimmten örtlichen Bereich miteinander korrelieren. Wenn dies nicht der Fall ist, d. h. wenn Paare von Messpunkten in diesem örtlichen Bereich nicht oder geringfügig miteinander korrelieren, kann dies ein Hinweis auf unerwartete Fehler bei der Bearbeitung der Werkstücke sein. Wenn zum Beispiel Messpunkte im Bereich einer Bohrung nicht wie erwartet miteinander korreliert sind, kann dies z. B. auf einen Mangel des verwendeten Bohrers hinweisen. Ausgelöst durch den genannten Hinweis auf Fehler kann dann das verwendete Bearbeitungswerkzeug und/oder Bearbeitungsverfahren genauer untersucht werden,

Gemäß den Ansprüchen werden Messpunkte einander zugeordnet, indem ein Cluster von Messpunkten gebildet wird, wobei zunächst ein erster Messpunkt für das Cluster ausgewählt oder ermittelt wird und dann weitere Messpunkte dem Clusters zugeordnet werden, indem geprüft wird, ob jeweils das Maß der Korrelation eines Paares von Messpunkten, das aus dem potentiellen weiteren Messpunkt und dem ersten Messpunkt besteht, einer Aufnahmebedingung zur Aufnahme des potentiellen weiteren Messpunktes in das Cluster genügt. Bei dem ersten Messpunkt kann auch von einem "Zentrum" des Clusters gesprochen werden, wobei die Lage des Zentrums im Allgemeinen nicht mit dem Schwerpunkt bzw. Massenzentrum aller Punkte des Clusters zusammenfällt. Vorzugsweise kann ein solches Zentrum ermittelt werden, indem für jeden Messpunkt oder zumindest für eine Mehrzahl von Messpunkten geprüft wird, wie viele andere Messpunkte die Aufnahmebedingung erfüllen. Als Zentrum kann dann insbesondere der Messpunkt ausgewählt werden, zu dem die meisten anderen Messpunkte die Aufnahmebedingung erfüllen. Es können auch mehrere Zentren ausgewählt werden und auf diese Weise mehrere Cluster von Messpunkten gebildet werden. Zum Beispiel können die mehreren Zentren die Messpunkte sein, zu denen jeweils die meisten anderen Messpunkte die Aufnahmebedingung erfüllen. Vorzugsweise werden nach Bildung eines ersten Clusters alle Punkte des Clusters nicht mehr für die Bildung weiterer Cluster betrachtet. Alternativ kann lediglich das Zentrum des bereits gebildeten Clusters für die Bildung weiterer Cluster nicht mehr betrachtet werden. Dies ermöglicht es insbesondere, dass Mitglieder des bereits gebildeten Clusters selbst wieder ein Zentrum eines weiteren Clusters werden können. Zum Beispiel kann eine möglichst kleine Anzahl von ClusterZentren ausgewählt werden, die bei vorgegebener Aufnahmebedingung zu einer insgesamt möglichst großen Anzahl von Messpunkten in den Clustern führen.

Die Aufnahmebedingung kann zum Beispiel darin bestehen, dass das Maß der Korrelation mindestens gleich oder (in einem anderen Fall) höchstens gleich einem vorgegebenen Schwellwert ist.

Alle Messpunkte eines Clusters, die nicht das Zentrum sind, sind in ähnlicher Weise mit dem Zentrum des Clusters korreliert. Daraus lassen sich je nach örtlicher Verteilung der Messpunkte des Clusters, je nach den Abständen der Messpunkte zueinander und je nach Art und Wertebereich der Maße der Korrelation Schlussfolgerungen ziehen, auf die noch näher eingegangen wird.

Allgemein kann die Aufgabe bei der Bildung der Cluster wie folgt definiert werden: Finde eine möglichst kleine Anzahl von Clusterzentren, die eine möglichst große Anzahl von Messpunkten in Cluster zerlegen.

Insbesondere kann zumindest ein Cluster grafisch dargestellt werden, wobei (z. B. gerade und/oder gekrümmte) Verbindungslinien einer Mehrzahl der weiteren Messpunkte des Clusters zu dem ersten Messpunkt (dem Zentrum) gemeinsam mit einer Darstellung oder Teil-Darstellung eines der Werkstücke oder einer Soll-Form der Werkstücke dargestellt werden.

Alternativ oder zusätzlich kann zumindest ein Cluster grafisch dargestellt werden, wobei eine Umrisslinie um alle Clusterpunkte des Clusters erzeugt wird und der Bereich innerhalb der Umrisslinie in einer dem Cluster zugeordneten Farbe dargestellt wird. Insbesondere bei einer Vielzahl von Clusterpunkten, wie sie bei Messungen durch optische Sensoren vorkommen, ist eine derartige farbliche Darstellung eines Clusters übersichtlicher. Alternativ oder zusätzlich zu der farblichen Darstellung des Bereichs innerhalb der Umrisslinie kann die Umrisslinie selbst dargestellt werden. Es ist jedoch auch eine Darstellung ohne Umrisslinie möglich.

Vorzugsweise findet die Darstellung auf zumindest einem Bildschirm oder einem Display statt. Eine derartige Darstellung erlaubt es einem Betrachter, die aufgrund der Korrelation gegebenen Zusammenhänge schnell und übersichtlich zu erfassen.

Nicht nur nach Bildung zumindest einer Zuordnung von Messpunkten, wie oben beschrieben, zum Beispiel der Bildung eines oder mehrerer Cluster, kann unter Berücksichtigung der bestimmten Maße der Korrelation ein Prüfplan erstellt oder verändert werden. Bei dem Prüfplan handelt es sich um einen Plan, der zu vermessende Messpunkte für die Vermessung zusätzlicher Werkstücke aufweist. Optional können bei der Erstellung oder Veränderung des Prüfplans weitere Informationen berücksichtigt werden, insbesondere der Abstand der Messpunkte des jeweiligen Paars von Messpunkten. Sind zum Beispiel Messpunkte eines Paars miteinander hoch korreliert und genügen einem vorgegebenen Kriterium bezüglich des Abstandes, insbesondere überschreiten einen vorgegebenen Schwellwert des Abstandes nicht, dann kann einer der Messpunkte des Paars aus dem Prüfplan ausgeschlossen werden oder nicht in den Prüfplan aufgenommen werden. Insbesondere wenn ein Cluster von Messpunkten gebildet ist, kann das Zentrum des Clusters in dem Prüfplan beibehalten werden oder in den Prüfplan aufgenommen werden, können jedoch andere Messpunkte des Clusters ausgeschlossen oder nicht aufgenommen werden.

Nicht nur im Fall der Bildung einer Zuordnung von Messpunkten kann für eine Mehrzahl der Paare von Messpunkten jeweils ein Abstand der Messpunkte des Paars zueinander ermittelt werden. Die zusätzliche Berücksichtigung des Abstandes der Messpunkte des Paars verbessert die Möglichkeiten einer Berücksichtigung der bestimmten Korrelation. Während zum Beispiel Messpunkte mit geringem Abstand jedenfalls im Fall von Werkstücken gleicher Soll-Form mit hoher Wahrscheinlichkeit ein hohes Maß der Korrelation haben, sind hohe Korrelationen bei Messpunkten mit großem Abstand besonders auffällig. Es kann daher zum Beispiel nach Paaren von Messpunkten gesucht werden, insbesondere automatisch gesucht werden (zum Beispiel unter Verwendung des Datenverarbeitungs-Rechners, mit dem auch die Maße der Korrelation bestimmt wurden), die bei einem hohen Maß der Korrelation auch einen großen Abstand aufweisen. Beispielsweise wird ein Schwellwert für den Abstand vorgegeben und ein Schwellenwert für das Maß der Korrelation. Liegt sowohl der Abstand eines Paars von Messpunkten über dem Schwellwert für den Abstand als auch das Maß der Korrelation über seinem Schwellwert, ist das Paar auffällig und kann zum Beispiel automatisch ausgegeben werden. Alternativ oder zusätzlich kann eine grafische Darstellung stattfinden, auf die noch näher eingegangen wird.

Insbesondere kann der Abstand der Messpunkte in einem Koordinatensystem definiert sein, in dem die Soll-Form der Werkstücke angegeben ist. Es kommt somit nicht auf den tatsächlichen Abstand der Messpunkte eines hergestellten Werkstücks an, sondern auf den Abstand bezüglich der Soll-Form. Das entsprechende Modell der Soll-Form kann auch als Nominalmodell bezeichnet werden. Alternativ oder zusätzlich kann es sich bei dem Abstand zum Beispiel um den direkten Abstand im dreidimensionalen Raum handeln oder um den Abstand entlang der Oberfläche des Werkstücks oder der Soll-Form. Im zuletzt genannten Fall haben daher auf gegenüberliegenden Seiten eines Werkstücks gelegene Messpunkte einen größeren Abstand als im Fall des direkten Abstandes im dreidimensionalen Raum.

Insbesondere anhand eines gebildeten Clusters oder mehrerer gebildeter Cluster kann ein Defekt einer Mehrzahl von Werkstücken mit gleicher Soll-Form festgestellt werden, z. B. wenn bei der Fertigung der Werkstücke systematisch eine Abweichung von der Soll-Form erzeugt wird. In diesem Fall sind alle Messpunkte in dem von der Soll-Form abweichenden Bereich miteinander hoch korreliert. Insbesondere wenn die Messdaten zu jedem Messpunkt eine Abweichung zu einer Vergleichskoordinate aufweisen, können die hoch korrelierten Abweichungen der Paare von Messpunkten, die zudem insbesondere ein Cluster bilden, auf einfache Weise wahrgenommen werden. Die Auswertung der ermittelten Maße der Korrelation ermöglicht es daher Aussagen über einen Bearbeitungsprozess zu treffen und ermöglicht es optional auch den Bearbeitungsprozess abzuändern.

Wenn für eine Mehrzahl der Paare von Messpunkten jeweils ein Abstand der Messpunkte des Paars zueinander ermittelt wird oder wurde, kann für die Mehrzahl der Paare von Messpunkten das bestimmte Maß der Korrelation in Abhängigkeit des ermittelten Abstandes der Messpunkte des Paars grafisch dargestellt werden, zum Beispiel zumindest auf einem Bildschirm oder einem Display. Dies erleichtert die Auswertung der bestimmten Korrelationen. Zum Beispiel kann aus der Darstellung erkannt werden, welche Paare von Messpunkten mit großem Abstand auch ein großes Maß der Korrelation aufweisen. Die grafische Darstellung kann ein Diagramm aufweisen, zum Beispiel ein Diagramm, bei dem entlang einer horizontalen Achse der Abstand aufgetragen ist und entlang einer vertikalen Achse das Maß der Korrelation aufgetragen ist.

Insbesondere wird das Verfahren unter Verwendung zumindest eines Datenverarbeitungs-Rechners ausgeführt. Als Rechner kommen handelsübliche Computer wie Server, Notebooks, Laptops, Desktops infrage, aber auch speziell ausgestaltete Recheneinheiten mit integrierten Schaltkreisen wie Grafikprozessoren, DSPs (digitale Signalprozessoren), Mikrocontroller, ASICs (anwendungsspezifische integrierte Schaltungen), ASSPs (anwendungsspezifische Standardprodukte) und/oder FPGAs (Field Programmable Gate Array). Es kann auch ein Netzwerk mehrerer der genannten Rechner zur Bestimmung der Korrelation verwendet werden. Dabei können dieselben Typen von Rechnern in dem Netzwerk verwendet werden oder unterschiedliche Typen. Die Messdaten können in computerlesbarer Form in zumindest einem Datenspeicher gespeichert sein, sodass der zumindest eine Rechner zur Bestimmung der Maße der Korrelation auf den Datenspeicher zugreifen kann. Hierzu kann zum Beispiel zumindest ein Permanent-Datenspeicher und/oder ein Arbeitsspeicher verwendet werden.

Zum Umfang der Erfindung gehört daher auch eine Vorrichtung zur Auswertung von Messdaten, die insbesondere ausgestaltet ist, das erfindungsgemäße Verfahren in einer seiner Ausgestaltungen durchzuführen. Die Vorrichtung weist den zumindest einen Datenverarbeitungs-Rechner auf, der ausgestaltet ist, das Maß der Korrelation jeweils für eine Mehrzahl der Sätze von Messdaten zu bestimmen. Der Datenverarbeitungs-Rechner kann einen Datenprozessor oder eine Anordnung von Datenprozessoren aufweisen, der/die konfiguriert ist, das erfindungsgemäße Verfahren in einer seiner Ausgestaltungen durchzuführen.

Ferner gehören zum Umfang der Erfindung ein Computerprogramm und ein computerlesbares Speichermedium. Das Computerprogramm umfasst Befehle, die bei der Ausführung des Programms durch einen Computer oder durch ein Computernetzwerk diesen/dieses veranlassen, das Verfahren gemäß der vorliegenden Erfindung in einer seiner Ausgestaltungen auszuführen. Das computerlesbare Speichermedium umfasst Befehle, die bei der Ausführung durch einen Computer oder durch ein Computernetzwerk diesen/dieses veranlassen, das Verfahren gemäß der vorliegenden Erfindung in einer seiner Ausgestaltungen auszuführen.

In der folgenden Figurenbeschreibung wird ein Ausführungsbeispiel für die Vermessung von Werkstücken beschrieben. Bei dem Ausführungsbeispiel wird ein Koordinatenmessgerät in Portalbauweise verwendet, an dem ein optischer Sensor angeordnet ist, um jeweils ein Werkstück zu vermessen. Die Erfindung ist jedoch nicht auf diese Art von Koordinatenmessgeräten und auch nicht auf diese Art von Sensoren beschränkt. Allerdings wird die Verwendung eines optischen Sensors zur Vermessung der Werkstücke bevorzugt, da optische Sensoren dazu in der Lage sind, eine Vielzahl von Messpunkten in kurzer Zeit zu vermessen, bzw. die zur Bestimmung der Koordinaten der Messpunkte geeignete Messinformationen in kurzer Zeit zu erfassen. In jedem Fall kann die Vermessung der Werkstücke zum Beispiel im Takt der Serienfertigung oder Serienbearbeitung von Werkstücken oder für eine Auswahl der in Serienfertigung oder Serienbearbeitung hergestellten Werkstücke durchgeführt werden. Diese Art der Vermessung wird auch als In-Line-Vermessung bezeichnet.

Insbesondere kann zum Beispiel mit einem optischen Sensor oder einer Mehrzahl von optischen Sensoren zunächst die Mehrzahl von Werkstücken vermessen werden und können die Maße der Korrelation für eine Mehrzahl der Sätze von Messdaten bestimmt werden. Dann kann zum Beispiel wie oben erwähnt ein Prüfplan zur Vermessung weitere Werkstücke erstellt oder abgeändert werden. Alternativ oder zusätzlich können die bestimmten Maße der Korrelation auf andere Weise genutzt werden, um die Vermessung weiterer Werkstücke vorzubereiten. Diese Vermessung weiterer Werkstücke kann dann mit einem anderen Messsensor oder anderen Messsensoren durchgeführt werden als zuvor. Zum Beispiel kann gegenüber der vorher durchgeführten Vermessung der Mehrzahl von Werkstücken zur Bestimmung der Korrelation nach der Auswertung der Korrelation bei einer reduzierten Anzahl von Messpunkten ein taktiler Sensor verwendet werden. Insbesondere kann daher bei der Vermessung der Werkstücke zur Bestimmung der Korrelation zumindest ein erster Messsensor mit einer ersten Messgenauigkeit verwendet werden und nach der Bestimmung der Korrelation und der Berücksichtigung der Korrelation für die weitere Vermessung ein zweiter Sensor verwendet werden mit einer zweiten Messgenauigkeit. Die zweite Messgenauigkeit kann größer sein als die erste Messgenauigkeit. Im Ergebnis führt diese Ausgestaltung daher dazu, dass unter Berücksichtigung der bestimmten Maße der Korrelation eine reduzierte Anzahl von Messpunkten erhalten wird und diese dann mit größerer Genauigkeit gemessen werden können.

Ausführungsbeispiele der Erfindung werden nun unter Bezugnahme auf die beigefügte Zeichnung beschrieben. Die einzelnen Figuren der Zeichnung zeigen:

Fig. 1    schematisch ein Koordinatenmessgerät mit einem optischen Messsensor, in dessen Messbereich ein Werkstück angeordnet ist, wobei die Anordnung schematisch außerdem einen mit dem Koordinatenmessgerät verbundenen Computer zeigt,

Fig. 2    eine Draufsicht auf ein Beispiel für ein Werkstück,

Fig. 3    eine stirnseitige Ansicht des in Fig. 2 dargestellten Werkstücks,

Fig. 4    eine Draufsicht auf ein anderes Werkstück, welches einen Formfehler aufweist,

Fig. 5    die Draufsicht auf das in Fig. 2 und Fig. 3 dargestellte Werkstück, wobei zusätzlich Cluster aus Messpunkten dargestellt sind,

Fig. 6    eine Draufsicht auf das in Fig. 4 dargestellte Werkstück, wobei ein Cluster von Messpunkten zusätzlich dargestellt ist,

Fig. 7    ein Diagramm mit Maßen einer Korrelation zwischen Messpunkten, die in Abhängigkeit des Abstandes der Messpunkte aufgetragen sind, und zwar für das in Fig. 2, Fig. 3 und Fig. 5 dargestellte Werkstück,

Fig. 8    ein Diagramm mit Maßen einer Korrelation zwischen Paaren von Messpunkten, die in Abhängigkeit des Abstandes der Messpunkte der Paare aufgetragen sind, und zwar für das in Fig. 4 und Fig. 6 dargestellte Werkstück,

Fig. 9    ein Flussdiagramm zur Darstellung eines Ausführungsbeispiels des erfindungsgemäßen Verfahrens, bei dem für eine Mehrzahl der Sätze von Messdaten jeweils in Bezug auf ein Paar von Messpunkten ein Maß der Korrelation bestimmt wird, und

Fig. 10    ein Flussdiagramm, dass Schritte bei der Auswertung der bestimmten Maße der Korrelation zeigt, wobei Cluster von miteinander korrelierten Messpunkten gebildet werden.

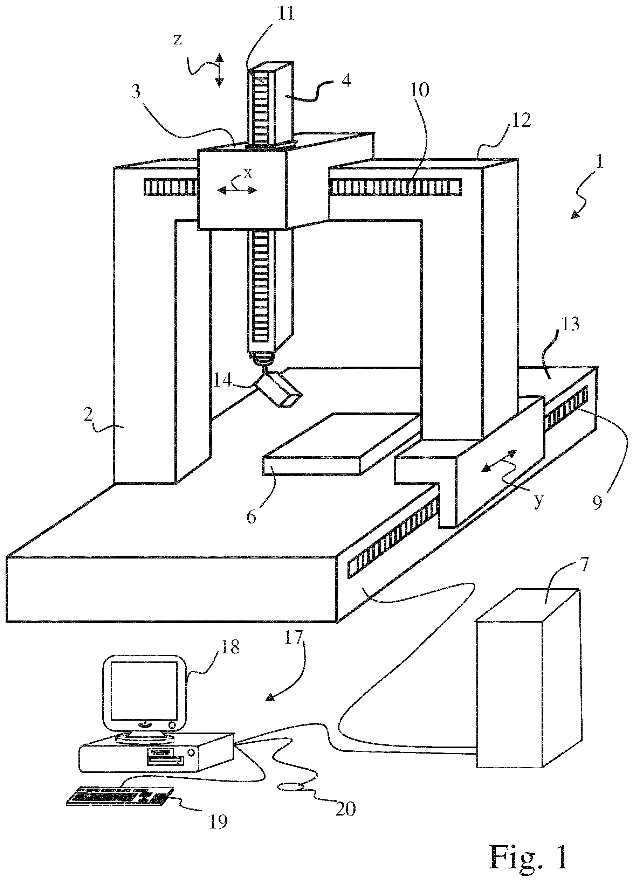

Fig. 1 zeigt ein Koordinatenmessgerät 1 in Portalbauweise. Auf einer Basis 13 des Koordinatenmessgeräts 1 ist ein Werkstück 6 angeordnet, welches unter Verwendung eines optischen Sensors 14, z.B. einer Kamera, vermessen wird. Aufgrund der Portalbauweise ist der optische Sensor 14 relativ zu dem Werkstück 6 beweglich. Das Portal 2 des Koordinatenmessgeräts 1 ist in einer ersten mit y bezeichneten Richtung linear beweglich. Die Position des Portals 2 kann z.B. unter Verwendung eines Maßstabes 9 in der y-Richtung ermittelt werden. An der Traverse 12 des Portals 2 ist ein Schlitten 3 in einer mit x bezeichneten Richtung linear verfahrbar. Die Position des Schlittens 3 relativ zu dem Portal 2 kann z.B. anhand eines Maßstabes 10 bestimmt werden. An dem Schlitten 3 ist wiederum eine Pinole 4 in einer mit z bezeichneten Richtung linear beweglich angeordnet. Der optische Sensor 14 ist am unteren Ende der Pinole 4 angeordnet, vorzugsweise um zumindest eine Drehachse beweglich relativ zur Pinole 4. Die vertikale Position der Pinole 4 und des optischen Sensors 14 kann z.B. anhand eines Maßstabes 11 entlang der Pinole 4 ermittelt werden. Die Richtungen x, y und z bilden ein kartesisches Koordinatensystem.

Wie schematisch rechts unten in Fig. 1 dargestellt ist, ist eine Steuerung 7 des Koordinatenmessgeräts 1 vorgesehen, die die Vermessung des Werkstücks 6 oder anderer Werkstücke steuert und die Messdaten von dem optischen Sensor 14 empfängt und optional aufzeichnet. Alternativ können die Messdaten von der Steuerung 7 direkt an einen Computer 17 weitergeleitet werden, der links unten in Fig. 1 schematisch dargestellt ist. Der Computer 17 ist mit einem Bildschirm 18 und zumindest einer Tastatur 19 sowie optional mit weiteren Bedieneinrichtungen wie einer Computermaus 20 ausgestattet. Wie anhand eines Ausführungsbeispiels noch näher ausgeführt wird, kann der Computer 17 ausgestaltet sein, z.B. durch entsprechend ausgestaltete Software (z. B. zumindest ein Computerprogramm), die auf ihm ausgeführt wird, Messdatensätze aus der Vermessung mehrerer Werkstücke durch das Koordinatenmessgerät 1 auszuwerten. Dabei kann insbesondere jeweils für Paare von Messpunkten ein Maß der Korrelation über alle Messdatensätze hin bestimmt werden. Die anhand von Fig. 1 beschriebene Ausführungsform mit einem Computer ist lediglich ein Beispiel. In der Praxis kann statt eines lokalen Personal-Computers zum Beispiel ein Computer-Server verwendet werden, auf den mehrere lokale Computer über ein Computer-Netzwerk Zugriff haben. Alternativ oder zusätzlich kann ein Hand-Held-Computer, wie beispielsweise ein Smartphone und/oder ein Tablet-Computer, zur Auswertung der Messdatensätze verwendet werden.

Insbesondere weisen die Messdatensätze in der Art eines Zeilenvektors oder Spaltenvektors eine Mehrzahl von Messinformationen auf. Jede Messinformation bildet ein Element des Vektors und ist das Ergebnis der Vermessung eines einzelnen Messpunktes des Werkstücks, dem der Messdatensatz zugeordnet ist. Die Messinformationen der verschiedenen Messdatensätze sind derart in gleicher Weise strukturiert, geordnet oder auf sie kann derart zugegriffen werden, dass die für die einander entsprechenden Messpunkte der verschiedenen Werkstücke zugeordnete Messinformation zur Auswertung der Messdatensätze ermittelbar und/oder verwendbar ist. Auf diese Weise kann zu den einander entsprechenden Messpunkten der verschiedenen Werkstücke jeweils die in den Messdatensätzen enthaltene Messinformation geladen werden und steht jeweils zusammen mit den Messinformationen anderer Messpunkte zur Bestimmung eines Maßes der Korrelation zur Verfügung. Die Messinformationen aller Messdatensätze können somit z.B. mathematisch in Matrixform dargestellt werden, wie die folgende Matrix zeigt:

$$
\begin{array}{c|cccc}
 & M1 & M2 & & Mk \\
C1 & 0{,}2 & 0{,}6 & \ldots & 0{,}5 \\
C2 & 0{,}4 & 1{,}3 & \ldots & 1{,}0 \\
\ldots & & & & \\
Cn & 0{,}7 & 0{,}8 & \ldots & 0{,}3
\end{array}
$$

Bei der Matrix handelt es sich um eine Matrix mit n Zeilen und k Spalten. Dabei sind k die Anzahl der Messdatensätze M und n die Anzahl der Messpunkte und somit auch der Messinformationen C in jedem Messdatensatz M. Daher sind die Messdatensätze M mit einem Index von 1 bis k bezeichnet und die Messinformationen C mit einem Index von 1 bis n bezeichnet. Die Zahlenwerte in der oben wiedergegebenen Matrix dienen lediglich als Beispiele. Sie können andere Werte aufweisen und können jeweils auch mehr als einen Wert aufweisen, z.B. wenn pro Messinformation mehr als eine Koordinate oder eine Koordinatenabweichung vorhanden ist.

Insbesondere wenn für jedes Paar der Messpunkte C, die in der vorangegangenen dargestellten Matrix enthalten sind, ein Maß der Korrelation über alle Messdatensätze M bestimmt worden ist, können die Korrelationen beispielsweise wie in der folgenden Korrelationsmatrix dargestellt werden. Bei einer Datenverarbeitung durch Computer können entsprechende mathematische Darstellungen für die Datenverarbeitung implementiert werden. Die folgende Korrelationsmatrix betrifft nicht nur den speziellen Fall, dass pro Messinformation lediglich eine Koordinate betrachtet wird und die Messinformation daher entweder den Messwert der Koordinate oder eine Abweichung zu einem Vergleichswert enthält. Eine Korrelation kann vielmehr auch dann angegeben werden, wenn mehrere Koordinaten oder Abweichungen pro Messpunkt betrachtet werden.

$$\begin{array}{c|cccc} & C1 & C2 & & Cn \\ \hline C1 & 1{,}0 & 0{,}9 & \ldots & 0{,}1 \\ C2 & & 1{,}0 & \ldots & -0{,}05 \\ \ldots & & & & \\ Cn & & & \ldots & 1{,}0 \end{array}$$

Da die Korrelationsmatrix auch die Korrelation der Messpunkte C mit sich selbst enthält, ist auf der Diagonalen der Matrix jeweils der Wert "1,0" eingetragen. Die bestimmten Maße der Korrelation sind rechts oberhalb der Diagonalen eingetragen. Es handelt sich daher um eine Dreiecksmatrix. Wie die drei beispielsweise eingetragenen Maße der Korrelation zeigen, können sowohl positive als auch negative Korrelationsmaße vorkommen. In dem Beispiel handelt es sich um die Pearson-Korrelation, die durch einen Korrelationskoeffizienten dargestellt wird, der von dem Wert -1 bis zu dem Wert +1 betragen kann. Jegliche andere Form der Darstellung oder Beschreibung der Messdatensätze und der Korrelationsmaße ist möglich.

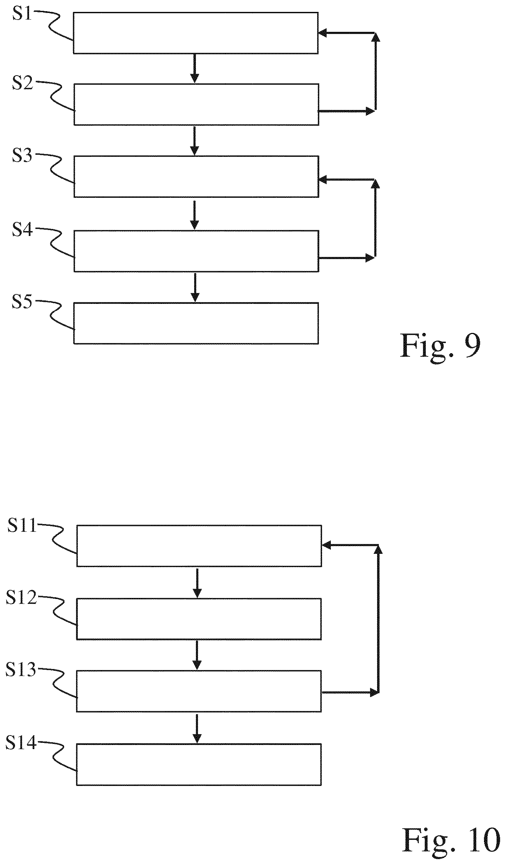

Bei der Erzeugung und Auswertung von Messdaten und der Bestimmung der Korrelation kann z.B. wie folgt vorgegangen werden. Dabei wird Bezug genommen auf Fig. 9.

Z.B. mittels des in Fig. 1 dargestellten Koordinatenmessgeräts 1 wird in Schritt S1 ein Werkstück vermessen, sodass an einer Mehrzahl von Messpunkten des Werkstücks Koordinaten bestimmt werden. Im folgenden Schritt S2 werden die durch die Vermessung der Messpunkte des Werkstücks erhaltenen Messinformationen gespeichert, insbesondere in Form eines Satzes von Messdaten. Der Messdatensatz kann jedoch auch erst später erzeugt werden. Ein Messdatensatz ist jeweils dem vermessenen Werkstück zugeordnet. Wie durch eine von Schritt S2 in Fig. 9 ausgehende Pfeilkette zu Schritt S1 dargestellt ist, werden die Schritte S1 und S2 für so viele Werkstücke wiederholt wie Werkstücke zu vermessen sind. Insbesondere können die Werkstücke entsprechend derselben Soll-Form gefertigt sein.

Nachdem alle Werkstücke vermessen sind, wird in Schritt S3 für ein Paar von Messpunkten, die einander entsprechend bei allen vermessenen Werkstücken vorhanden sind, ein Maß der Korrelation bestimmt. Das Maß der Korrelation wird in dem folgenden Schritt S4 gespeichert. Wie durch eine von Schritt S4 zu Schritt S3 führende Pfeilkette angedeutet ist, werden auch die Schritte S3 und S4 wiederholt, bis für eine Mehrzahl von Paaren von Messpunkten und vorzugsweise für alle Paare von Messpunkten jeweils ein Maß der Korrelation bestimmt ist und abgespeichert ist. In Schritt S5, der auf Schritt S4 folgt, sobald alle zu bestimmenden Maße der Korrelation bestimmt worden sind, endet das Verfahren. Optional kann in Schritt S5 eine Auswertung der bestimmten Maße der Korrelation durchgeführt werden.

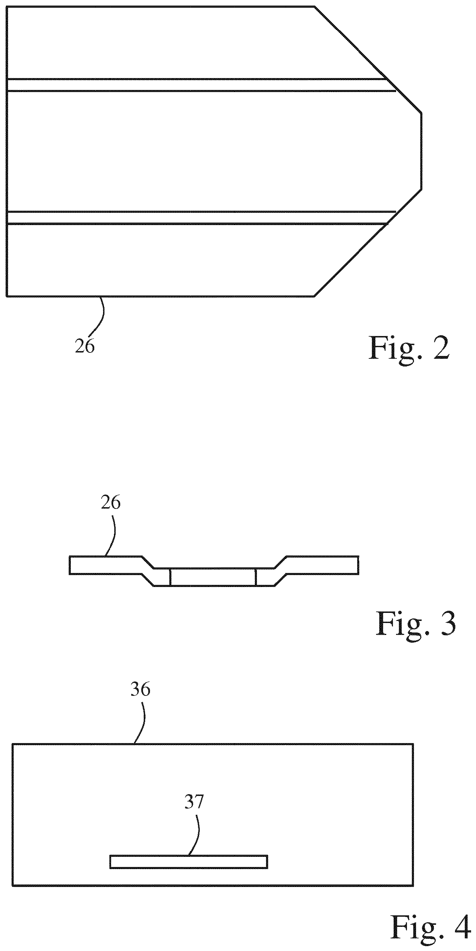

Anhand von Fig. 10 wird noch ein Ausführungsbeispiel für eine Auswertung der bestimmten Maße der Korrelation beschrieben. Zunächst wird jedoch auf die in Fig. 2 bis Fig. 4 schematisch dargestellten Werkstücke eingegangen.

Fig. 2 zeigt in Draufsicht ein Werkstück, dessen Ansicht von vorne in Fig. 3 gezeigt ist. Das dargestellte Werkstück 26 weist einen zweifach abknickenden Verlauf auf, wie Fig. 3 zeigt. Zur Herstellung des abknickenden Verlaufs hat eine Bearbeitung eines plattenförmigen Halbzeugs stattgefunden, beispielsweise ein Tiefziehvorgang. Z.B. wird eine Vielzahl gleichartiger Werkstücke nacheinander in einem Fertigungsprozess hergestellt. Jedes dieser Werkstücke kann z.B. unter Verwendung eines optischen Sensors vermessen werden, sodass für eine Vielzahl von Oberflächenpunkten Koordinaten ermittelt werden. Z.B. reicht es bei dem in Fig. 2 und Fig. 3 dargestellten Werkstück aus, die Koordinaten dieser Messpunkte in Bezug auf eine Koordinatenachse zu bestimmen, die senkrecht zur Figurenebene der Fig. 2 verläuft und die in Fig. 3 in vertikaler Richtung verläuft. Vorzugsweise werden die Koordinaten auf ihre jeweilige Soll-Koordinate bezogen, d.h. in dem entsprechenden Messdatensatz des Werkstücks wird die Differenz zwischen der gemessenen Koordinate und der Soll-Koordinate erfasst.

Eine Draufsicht auf ein Werkstück 36 anderer Art ist in Fig. 4 schematisch dargestellt. Durch einen rechteckigen Bereich 37 ist in Fig. 4 ferner angedeutet, dass das Werkstück 36 einen Bereich aufweist, in dem systematisch eine Abweichung von seiner Soll-Form besteht. Systematisch bedeutet, dass diese Abweichung in allen oder vielen hergestellten Exemplaren des Werkstücks vorhanden ist.

Unter Bezugnahme auf Fig. 10 wird nun ein Ausführungsbeispiel des Verfahrens zur Auswertung der für die Werkstücke bestimmten Maße der Korrelation beschrieben. Zu der Art der Werkstücke, die in Fig. 2 und Fig. 3 dargestellt ist, wurde jeweils eine Vielzahl von Messpunkten vermessen und für alle Paare von Messpunkten ein Maß der Korrelation über alle erhaltenen Messdatensätze bestimmt. Beispielsweise wurde das Maß der Korrelation als Pearson-Korrelationskoeffizient bestimmt. Ferner wird ein Schwellwert vorgegeben. Alle Paare von Messpunkten, deren Maß der Korrelation größer oder gleich dem Schwellwert ist, werden als hoch miteinander korreliert aufgefasst und als voneinander abhängig interpretiert. Die Abhängigkeit lässt Rückschlüsse auf die Fertigung zu.

In Schritt S11 (Fig. 10) wird ein Messpunkt ermittelt, der von einer großen Anzahl anderer Messpunkte abhängig ist oder der der Messpunkt ist, der von den meisten anderen Messpunkten abhängig ist. Hierzu wird z.B. in der entsprechenden Korrelationsmatrix für jeden Messpunkt die Anzahl der Maße der Korrelation bestimmt, die zumindest gleich dem Schwellwert sind. Selbstverständlich kann der Schwellwert höher oder niedriger vorgegeben werden als durch den Wert 0,9. Um einen Messpunkt mit einer hohen Anzahl von Abhängigkeiten zu bestimmen, kann z.B. eine Mindestanzahl anderer Messpunkte vorgegeben sein/werden, von denen der jeweilige Messpunkt abhängig ist. Der ermittelte Messpunkt mit der hohen Anzahl von Abhängigkeiten oder mit der höchsten Anzahl von Abhängigkeiten wird nun als Clusterzentrum aufgefasst. In dem auf Schritt S11 folgenden Schritt S12 werden für das Clusterzentrum die abhängigen Messpunkte identifiziert.

Alternativ können die abhängigen Messpunkte identifiziert werden, während das Clusterzentrum ermittelt wird. Beispielsweise kann bei der Ermittlung der Anzahl der abhängigen Messpunkte bereits protokolliert bzw. festgehalten werden, um welche abhängigen Messpunkte es sich handelt. Beispielsweise kann für jeden der Messpunkte aus der Korrelationsmatrix eine dem Messpunkt zugeordnete Matrix oder ein Zeilenvektor oder Spaltenvektor gebildet werden, in der/dem in Bezug auf jeden anderen Messpunkt eingetragen wird, ob es sich um einen abhängigen oder nicht abhängigen Messpunkt handelt.

Wenn für ein Clusterzentrum alle abhängigen Messpunkte ermittelt sind, d.h. wenn ein Cluster von Messpunkten mit einem Clusterzentrum ermittelt worden ist, kann die Vorgehensweise wiederholt werden. Hierzu wird aus der Menge der für das Clusterzentrum grundsätzlich infrage kommenden Messpunkte in dem auf Schritt S12 folgenden Schritt S13 das in Schritt S11 ermittelte Clusterzentrum entfernt. Optional werden aus der Menge von Messpunkten auch die in Schritt S12 ermittelten Messpunkte entfernt, die von dem Clusterzentrum abhängig sind. Nun werden die Schritte S11 und S12 wiederholt bzw. wird alternativ in einem Schritt für jedes infrage kommende Clusterzentrum bereits identifiziert, um welche abhängigen Messpunkte es sich handelt.

Wenn alle Cluster identifiziert worden sind, dann kann optional mit Schritt S14 fortgefahren werden. Dabei kann die Anzahl der zu identifizierenden Cluster auf einen Maximalwert begrenzt sein oder kann gefordert sein, dass ein Cluster eine Mindestanzahl von Clusterpunkten, die von dem Clusterzentrum abhängig sind, aufweisen muss.

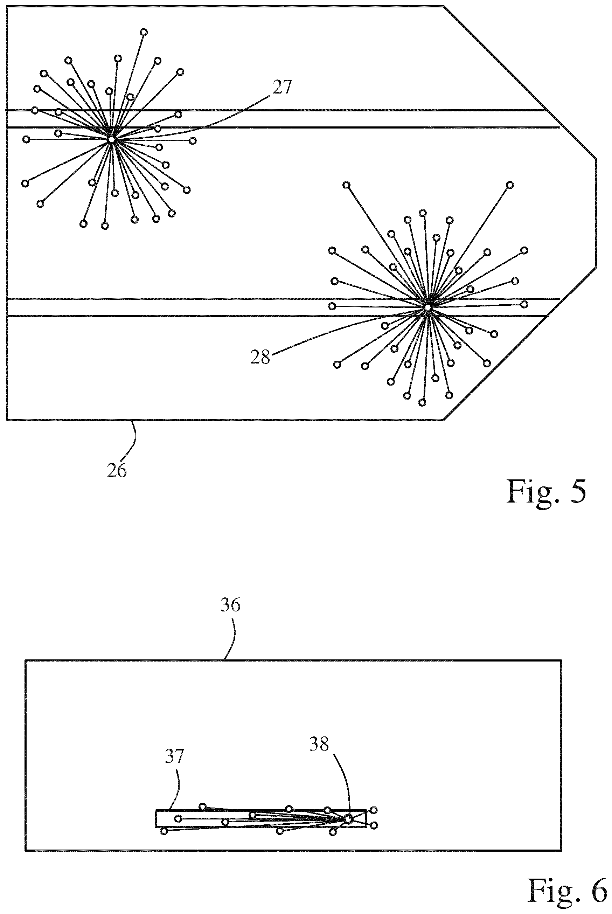

In Schritt S14 wird zumindest eines der ermittelten Cluster oder das einzige ermittelte Cluster grafisch dargestellt. In dem Ausführungsbeispiel von Fig. 5 sind zwei Cluster grafisch dargestellt, und zwar in einer grafischen Darstellung des Werkstücks 26 aus Fig. 2 und Fig. 3. In dem Ausführungsbeispiel handelt es sich um die Draufsicht aus Fig. 2, die auch zur Darstellung der Cluster in Fig. 5 mitverwendet wird. Man erkennt für jedes der beiden dargestellten Cluster das Clusterzentrum 27, 28 sowie die von dem jeweiligen Clusterzentrum 27, 28 abhängigen Clusterpunkte. Um die Beziehung der Abhängigkeit zu dem Clusterzentrum 27, 28 zu veranschaulichen, ist das Clusterzentrum 27, 28 mit jedem seiner abhängigen Punkte über eine gerade Linie verbunden. Alle Punkte sind durch kleine Kreise in Fig. 5 dargestellt.

Aufgrund dieser Darstellung kann ein Betrachter unmittelbar erfassen, in welchem Bereich der Oberfläche des Werkstücks sich von dem Clusterzentrum abhängige Messpunkte befinden. Die Darstellungen in Fig. 5 und auch in Fig. 6 sind vereinfachte Darstellungen. Die Anzahl der Punkte pro Cluster ist im Vergleich zur bevorzugten Vorgehensweise in der Praxis stark verringert, um die einzelnen Clusterpunkte erkennbar zu machen.

In der Praxis können zur Darstellung der verschiedenen Cluster verschiedene Farben verwendet werden. Dann ist es nicht mehr erforderlich, dass jeder einzelne Clusterpunkt einzeln vom Betrachter erkannt wird. Anhand der Verbindungslinien der Clusterzentren zu den abhängigen Messpunkten werden die Cluster auch bei einer sehr hohen Anzahl von Messpunkten wahrgenommen. Selbstverständlich ist es möglich, dass ein Betrachter die Darstellung verändern kann und z.B. die Clusterpunkte ausblenden kann, die einer bestimmten Bedingung nicht genügen oder der Bedingung genügen. Auf diese Weise können z.B. Clusterpunkte mit einer Entfernung zum Clusterzentrum kleiner als eine Maximalentfernung oder größer als ein Mindestentfernung dargestellt oder ausgeblendet werden.

Zurückkommend auf das in Fig. 2, Fig. 3 und Fig. 5 dargestellte Werkstück 26 befinden sich die Clusterzentren 27, 28 jeweils in einem der durch Bearbeitung des Halbzeugs erzielten Bereich der Verformung. Daher ist auch, wie es den dargestellten Clustern entspricht, die Mehrzahl der abhängigen Messpunkte des jeweiligen Clusterzentrums 27, 28 im Bereich der Verformung und in der Nähe des Clusterzentrums 27, 28 angeordnet. Wie bereits erwähnt, handelt es sich um eine vereinfachte Darstellung. Weitere Messpunkte der Cluster noch näher an dem des jeweiligen Clusterzentrum 27, 28 sind der Erkennbarkeit der Messpunkte wegen nicht dargestellt.

Optional kann nach Schritt S13 oder nach Schritt S14 ein Prüfplan zur Vermessung weiterer Werkstücke der gleichen Art erstellt werden oder geändert werden. Ein Prüfplan weist im Allgemeinen eine Mehrzahl von Messpunkten auf und definiert, welche Messergebnisse durch Vermessung und Auswertung eines Werkstücks erhalten werden sollen, wie z.B. Abstände bestimmter Messpunkte, Durchmesser, Rundheit von zylindrischen Bereichen usw. Aus einem Cluster können z.B. diejenigen Messpunkte aus dem Prüfplan entfernt werden oder nicht in den Prüfplan aufgenommen werden, die einen Abstand zu dem jeweiligen Clusterzentrum aufweisen, der kleiner ist als ein vorgegebener Mindestabstand. Dem liegt der Gedanke zugrunde, dass es zu erwarten ist, dass in geringem Abstand zu einem Clusterzentrum liegende Messpunkte von dem Clusterzentrum abhängig sind. Ist ein Werkstück an dem Clusterzentrum verformt worden, hat dies in sehr vielen Fällen Auswirkungen auf den Nah-Bereich um das Clusterzentrum herum. Durch die Auswahl bzw. Eliminierung von Messpunkten kann die Ausführung des Prüfplans verkürzt werden und/oder die Genauigkeit bei der Ausführung des Prüfplans gesteigert werden, wenn z.B. ein Koordinatenmessgerät mit größerer Messgenauigkeit die zur Verfügung stehende Messzeit ausnutzt.

Eine weitere mögliche Vorgehensweise bei der Auswertung der bestimmten Maße der Korrelation besteht darin, dass Clusterzentren später bei der Ausführung eines Prüfplans in Bezug auf weitere Werkstücke im Unterschied zu den von ihnen abhängigen Messpunkten in besonderer Weise behandelt werden. Dies kann bereits bei der Vermessung der Messpunkte beginnen, indem Clusterzentren mit höherer Genauigkeit vermessen werden als andere Messpunkte. Alternativ oder zusätzlich können einzelne Qualitätsanforderungen auf Clusterzentren bezogen werden. Z.B. kann gefordert sein, dass Werkstücke an zumindest einem Clusterzentrum eine vorgegebene Genauigkeitsanforderung erfüllen und/oder mehrere Werkstücke des gleichen Typs an zumindest einem Clusterzentrum Koordinaten aufweisen, die nicht mehr als um ein vorgegebenes Streuungsmaß von ihrem Mittelwert abweichen.

In Fig. 6 ist zu dem in Fig. 4 dargestellten Werkstück 36 eine Darstellung gewählt, in der auch ein einziges Cluster enthalten ist. Das Clusterzentrum 38 des Clusters liegt in dem Bereich 37, der der systematischen Abweichung von der Soll-Form entspricht. Ferner handelt es sich wieder um ein Ausführungsbeispiel, bei dem die Messinformationen in den Messdatensätzen Abweichungen zwischen gemessenen Koordinaten und Soll-Koordinaten sind.

Daher liegen alle Messpunkte des Clusters, die von dem Clusterzentrum 38 abhängig sind, in dem Bereich 37. In der Praxis, wenn der Bereich 37 noch nicht bekannt ist, fällt die örtliche Verteilung der Messpunkte des Clusters auf, denn alle Messpunkte liegen ungefähr innerhalb eines länglichen rechteckigen Bereichs wie dem Bereich 37. Das Fehlen von Clusterpunkten in der Darstellung der Fig. 6 oberhalb der dargestellten Clusterpunkte weist darauf hin, dass es sich um eine lokal begrenzte erhebliche Soll-Form-Abweichung handelt.

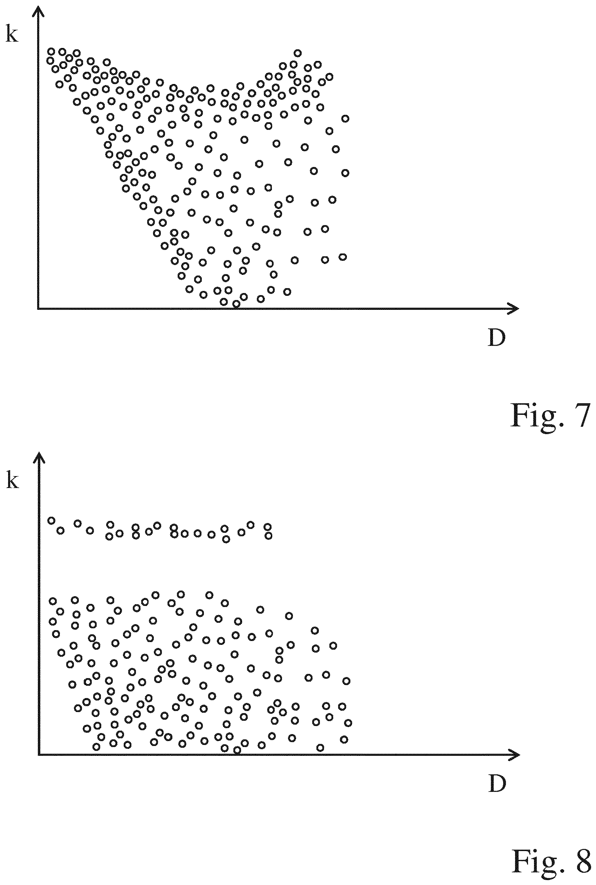

Eine Art der Auswertung der bestimmten Maße der Korrelation, die alternativ oder zusätzlich zu der zuvor beschriebenen Auswertung durchgeführt werden kann, wird nun anhand der Fig. 7 und Fig. 8 beschrieben. In beiden Darstellungen ist für eine Vielzahl von Messpunkten jeweils das Maß k der Korrelation in Abhängigkeit von dem Abstand D des jeweiligen Messpunkts zu einem anderen Messpunkt dargestellt, insbesondere für jede Kombination von Messpunkten. Fig. 7 zeigt einen solchen Zusammenhang für das in Fig. 2, Fig. 3 und Fig. 5 dargestellte Werkstück. Fig. 8 zeigt einen solchen Zusammenhang für das in Fig. 4 und Fig. 6 dargestellte Werkstück.

In der Praxis wird es bevorzugt, dass für sehr viel mehr Messpunkte die Abhängigkeiten entsprechend den in Fig. 7 und Fig. 8 dargestellten dargestellt werden. Um die Effekte gut erkennbar zu machen, können in der Praxis Bereiche in den Darstellungen abhängig von der Dichte der dargestellten Abhängigkeiten mit unterschiedlichen Farben dargestellt werden. Diese Art der Darstellung ist der einer sogenannten Heat-Map ähnlich. Es soll betont werden, dass die in Fig. 7 und Fig. 8 dargestellten kleinen Kreise keine Messpunkte darstellen, sondern die Abhängigkeiten des jeweiligen Maßes der Korrelation von dem Abstand der Messpunkte des betrachteten Paars. Je mehr solcher Abhängigkeiten in dem Diagramm pro Flächeneinheit dargestellt sind, d.h. je mehr Paare von Punkten eine ähnliche, nahezu gleiche Abhängigkeit aufweisen, desto größer ist die Dichte.

In dem in Fig. 7 dargestellten Fall, der dem Werkstück in Fig. 2, Fig. 3 und Fig. 5 entspricht, fällt auf, dass sich in einem dreiecksförmigen Bereich mit kleinen Werten des Abstandes D und kleinen Werten des Maßes k der Korrelation keine Einträge befinden. Dies drückt den oben bereits erwähnten Sachverhalt aus, dass Punkte in geringem Abstand typischerweise eine hohe Korrelation zueinander aufweisen. Ansonsten ist aus Fig. 7 erkennbar, dass es zwei Maxima des Korrelationsmaßes k gibt, wobei dort jeweils eine große Dichte gegeben ist. Die Dichte der dargestellten Abhängigkeiten ist ferner am Rand des dreieckförmigen Bereichs groß, in dem sich keine Abhängigkeiten befinden. Die zwei Maxima entsprechen den Strukturen des Werkstücks mit zwei länglichen verformten Bereichen. Es besteht eine Abhängigkeit zwischen Punkten der beiden verschiedenen parallel zueinander verformten Bereiche des Werkstücks 26.

Bei dem Werkstück 36 aus Fig. 4 und Fig. 6 fällt auf, dass es einen schmalen Bereich von Abhängigkeiten bei großen Korrelationsmaßen k über einen durchgehenden Bereich von Abständen D der Punktepaare gibt. Unterhalb dieses Bereichs gibt es einen Bereich, in dem sich keine Abhängigkeiten befinden. Dies geht auf die oben bereits erläuterte Tatsache zurück, dass sich in dem örtlichen Bereich 37 des Werkstücks 36 eine systematische Abweichung von der Soll-Form befindet. Die anderen Abhängigkeiten in Fig. 8 sind nahezu gleich verteilt, wobei es wieder einen dreieckförmigen Bereich ohne Abhängigkeiten gibt, bei kleinen Abständen D der Punktepaare und kleinen Werten des Korrelationsmaßes k.

Die Abhängigkeit k(D) des Korrelationsmaßes k vom Abstand D der Punktepaare kann zusätzlich zu zumindest einem Cluster grafisch dargestellt werden, insbesondere gleichzeitig, z.B. auf verschiedenen Bereichen desselben Bildschirms oder Displays oder auf nebeneinander angeordneten Bildschirmen oder Displays. Ferner kann die Darstellung derart für einen Betrachter veränderbar sein, dass der Betrachter durch Auswählen (z.B. durch Anklicken mit einer Computermaus) eine Abhängigkeit k(D) in der Darstellung eine hervorgehobene Darstellung der zugehörigen Messpunkte in der Clusterdarstellung erreicht. Dies erleichtert das Verständnis der Zusammenhänge der beiden Darstellungen und erleichtert auch Schlussfolgerungen. Wird z.B. in der Darstellung der Abhängigkeiten k(D) in Fig. 8 eine Abhängigkeit in dem oberen Bereich ausgewählt, werden die entsprechenden Punkte in dem Bereich 37 in Fig. 6 hervorgehoben. Der Betrachter kann somit auf einfache Weise erkennen, wo in dem Werkstück sich der Bereich mit der hohen Korrelation befindet. Bei der hervorgehobenen Darstellung kann insbesondere auch das zu dem Punktepaar zugeordnete Cluster hervorgehoben werden. Dies ist von Vorteil, da im Allgemeinen mehr als ein Cluster bei der Art der Darstellungen entsprechend Fig. 5 und Fig. 6 dargestellt wird.

In einem anderen Fall als anhand der Figuren bereits beschrieben wurde, kann durch die Auswertung der bestimmten Maße der Korrelation ermittelt werden, ob eine erwartete hohe Korrelation besteht oder nicht besteht. Z.B. findet bei der Erstellung einer Serie von Werkstücken immer in dem gleichen Abstand zueinander eine gleichartige Bearbeitung statt, wie z.B. das Aufschweißen eines Paares von Stiften in gleichem Abstand der Stifte zueinander. Es wird daher erwartet, dass in diesem Abstand Punktepaare mit hoher Korrelation zueinander vorhanden sind, insbesondere wenn in den erzeugten Messdatensätzen der Werkstücke unmittelbar die Messkoordinaten enthalten sind. Aber auch wenn in den Messdatensätzen die Abweichungen zur Soll-Form enthalten sind, kann bei dem Abstand der Bereiche, die gleichartig bearbeitet werden, eine hohe Korrelation erwartet werden. Ist die Korrelation bei diesem Abstand nicht besonders groß oder nur für sehr wenige Messpunkte vorhanden, kann die Schlussfolgerung gezogen werden, dass der Bearbeitungsprozess nicht wie erwartet ausgeführt wurde.

## Patentansprüche

1. Computerimplementiertes Verfahren zur Auswertung von Messdaten aus einer Vermessung einer Mehrzahl von Werkstücken (26; 36), wobei

   • jedem Werkstück (26; 36) ein Satz von Messdaten zugeordnet ist, wobei der Satz (M) von Messdaten einer Mehrzahl von Messpunkten der Werkstücke (26; 36) entspricht und der Satz (M) von Messdaten zu jedem Messpunkt der Werkstücke (26; 36)

      - zumindest eine gemessene Koordinate und/oder
      - für jede gemessene Koordinate eine Abweichung zu einer Vergleichskoordinate aufweist und

   • für eine Mehrzahl der Sätze (M) von Messdaten, jeweils in Bezug auf ein Paar von Messpunkten, das aus zwei Messpunkten der Werkstücke (26; 36) besteht, ein Maß (k) der Korrelation der gemessenen Koordinaten und/oder der Abweichungen jeweils für eine Mehrzahl von Paaren von Messpunkten über die Mehrzahl der Sätze (M) von Messdaten bestimmt wird,

   **dadurch gekennzeichnet, dass**

   Messpunkte, die Teil eines Paars von Messpunkten sind, dessen Maß (k) der Korrelation eine vorgegebene Auswahlbedingung erfüllt, einander zugeordnet werden und

   ein Cluster von Messpunkten gebildet wird, wobei zunächst ein erster Messpunkt für das Cluster ausgewählt oder ermittelt wird und dann weitere Messpunkte dem Cluster zugeordnet werden, indem geprüft wird, ob jeweils das Maß (k) der Korrelation des Paares von Messpunkten, das aus dem potentiellen weiteren Messpunkt und dem ersten Messpunkt besteht, einer Aufnahmebedingung zur Aufnahme des potentiellen weiteren Messpunktes in das Cluster genügt.

2. Verfahren nach Anspruch 1, **dadurch gekennzeichnet, dass** zumindest ein Teilbereich der Mehrzahl von Werkstücken (26; 36) die gleiche Soll-Form hat.

3. Verfahren nach Anspruch 1 oder 2, **dadurch gekennzeichnet, dass** das Maß (k) der Korrelation einen Korrelationskoeffizienten aufweist.

4. Verfahren nach einem der Ansprüche 1 bis 3, **dadurch gekennzeichnet, dass** das Cluster grafisch dargestellt wird, wobei Verbindungslinien einer Mehrzahl der weiteren Messpunkte des Clusters zu dem ersten Messpunkt gemeinsam mit einer Darstellung oder Teil-Darstellung eines der Werkstücke (26; 36) oder einer Soll-Form der Werkstücke (26; 36) dargestellt werden.

5. Verfahren nach einem der Ansprüche 1 bis 4, **dadurch gekennzeichnet, dass** das Cluster grafisch dargestellt wird, wobei eine Umrisslinie um alle Clusterpunkte des Clusters erzeugt wird und der Bereich innerhalb der Umrisslinie in einer dem Cluster zugeordneten Farbe dargestellt wird.

6. Verfahren nach einem der Ansprüche 1 bis 5, **dadurch gekennzeichnet, dass** ein Prüfplan, der zu vermessende Messpunkte für die Vermessung zusätzlicher Werkstücke (26; 36) aufweist, unter Berücksichtigung der bestimmten Maße (k) der Korrelation erstellt oder verändert wird.

7. Verfahren nach einem der Ansprüche 1 bis 6, **dadurch gekennzeichnet, dass** für eine Mehrzahl der Paare von Messpunkten jeweils ein Abstand (D) der Messpunkte des Paars zueinander ermittelt wird.

8. Verfahren nach Anspruch 7, **dadurch gekennzeichnet, dass** für die Mehrzahl der Paare von Messpunkten das bestimmte Maß (k) der Korrelation in Abhängigkeit des ermittelten Abstandes (D) der Messpunkte des Paars grafisch dargestellt wird.

**9.** Vorrichtung zur Auswertung von Messdaten aus einer Vermessung einer Mehrzahl von Werkstücken (26; 36), insbesondere zur Durchführung des Verfahrens nach einem der vorhergehenden Ansprüche, wobei die Vorrichtung zumindest einen Datenverarbeitungs-Rechner aufweist und wobei

• jedem Werkstück (26; 36) ein Satz (M) von Messdaten zugeordnet ist, wobei der Satz (M) von Messdaten einer Mehrzahl von Messpunkten der Werkstücke (26; 36) entspricht und der Satz (M) von Messdaten zu jedem Messpunkt der Werkstücke (26; 36)

    - zumindest eine gemessene Koordinate und/oder
    - für jede gemessene Koordinate eine Abweichung zu einer Vergleichskoordinate aufweist und

• der zumindest eine Datenverarbeitungs-Rechner ausgestaltet ist, für eine Mehrzahl der Sätze von Messdaten, jeweils in Bezug auf ein Paar von Messpunkten, das aus zwei Messpunkten der Werkstücke (26; 36) besteht, ein Maß der Korrelation der gemessenen Koordinaten und/oder der Abweichungen jeweils für eine Mehrzahl von Paaren von Messpunkten über die Mehrzahl der Sätze (M) von Messdaten zu bestimmen,
**dadurch gekennzeichnet, dass** der Datenverarbeitungs-Rechner ausgestaltet ist, Messpunkte, die Teil eines Paars von Messpunkten sind, dessen Maß (k) der Korrelation eine vorgegebene Auswahlbedingung erfüllt, einander zuzuordnen werden und
ein Cluster von Messpunkten zu bilden, wobei zunächst ein erster Messpunkt für das Cluster ausgewählt oder ermittelt wird und dann weitere Messpunkte dem Cluster zugeordnet werden, indem geprüft wird, ob jeweils das Maß (k) der Korrelation des Paares von Messpunkten, das aus dem potentiellen weiteren Messpunkt und dem ersten Messpunkt besteht, einer Aufnahmebedingung zur Aufnahme des potentiellen weiteren Messpunktes in das Cluster genügt.

**10.** Computerprogramm, umfassend Befehle, die bei der Ausführung des Programms durch einen Computer oder durch ein Computernetzwerk diesen/dieses veranlassen, das Verfahren nach einem der Ansprüche 1 bis 8 auszuführen.

**11.** Computerlesbares Speichermedium, umfassend Befehle, die bei der Ausführung durch einen Computer oder durch ein Computernetzwerk diesen/dieses veranlassen, das Verfahren nach einem der Ansprüche 1 bis 8 auszuführen.

**Claims**

**1.** Computer-implemented method for evaluating measurement data from a measurement on a plurality of workpieces (26; 36), wherein

• each workpiece (26; 36) has an associated set of measurement data, wherein the set (M) of measurement data corresponds to a plurality of measurement points on the workpieces (26; 36), and the set (M) of measurement data has, for each measurement point on the workpieces (26; 36),

    - at least one measured coordinate and/or,
    - for each measured coordinate, a divergence from a comparison coordinate, and

• a measure (k) of the correlation of the measured coordinates and/or of the divergences is determined for a plurality of the sets (M) of measurement data, in each case with regard to a pair of measurement points that consists of two measurement points on the workpieces (26; 36), for each of a plurality of pairs of measurement points by way of the plurality of the sets (M) of measurement data,

**characterized in that**

measurement points that are part of a pair of measurement points whose measure (k) of the correlation satisfies a prescribed selection condition are associated with one another and
a cluster of measurement points is formed, wherein a first measurement point is first of all selected or ascertained for the cluster and then further measurement points are associated with the cluster by checking whether the respective measure (k) of the correlation of the pair of measurement points that consists of the potential further measurement point and the first measurement point satisfies an inclusion condition for including the potential further measurement point in the cluster.

**2.** Method according to Claim 1, **characterized in that** at least one subregion of the plurality of workpieces (26; 36) has the same specified shape.

**3.** Method according to Claim 1 or 2, **characterized in that** the measure (k) of the correlation has a correlation coefficient.

**4.** Method according to one of Claims 1 to 3, **characterized in that** the cluster is represented graphically, wherein connecting lines from a plurality of the further measurement points of the cluster to the first measurement point are represented together with a representation or partial representation of one of the workpieces (26; 36) or of a specified shape of the workpieces (26; 36).

5. Method according to one of Claims 1 to 4, **characterized in that** the cluster is represented graphically, wherein a contour line is produced around all cluster points of the cluster and the region inside the contour line is represented in a colour associated with the cluster.

6. Method according to one of Claims 1 to 5, **characterized in that** a test schedule that has measurement points to be measured for the measurement of additional workpieces (26; 36) is created or altered in light of the determined measures (k) of the correlation.

7. Method according to one of Claims 1 to 6, **characterized in that** a distance (D) of the measurement points of the pair from one another is ascertained for each of a plurality of the pairs of measurement points.

8. Method according to Claim 7, **characterized in that** the determined measure (k) of the correlation is represented graphically for the plurality of the pairs of measurement points on the basis of the ascertained distance (D) between the measurement points of the pair.

9. Apparatus for evaluating measurement data from a measurement of a plurality of workpieces (26; 36), in particular for performing the method according to one of the preceding claims, wherein the apparatus has at least one data processing computer and wherein

   • each workpiece (26; 36) has an associated set (M) of measurement data, wherein the set (M) of measurement data corresponds to a plurality of measurement points on the workpieces (26; 36) and the set (M) of measurement data has, for each measurement point on the workpieces (26; 36),

      - at least one measured coordinate and/or,
      - for each measured coordinate, a divergence from a comparison coordinate, and

   • the at least one data processing computer is configured to determine a measure of the correlation of the measured coordinates and/or of the divergences for a plurality of the sets of measurement data, in each case with regard to a pair of measurement points that consists of two measurement points on the workpieces (26; 36), for each of a plurality of pairs of measurement points by way of the plurality of the sets (M) of measurement data,

   **characterized in that** the data processing computer is configured to associate measurement points that are part of a pair of measurement points whose measure (k) of the correlation satisfies a prescribed selection condition with one another and

   to form a cluster of measurement points, wherein a first measurement point is first of all selected or ascertained for the cluster and then further measurement points are associated with the cluster by checking whether the respective measure (k) of the correlation of the pair of measurement points that consists of the potential further measurement point and the first measurement point satisfies an inclusion condition for including the potential further measurement point in the cluster.

10. Computer program comprising instructions that, when the program is executed by a computer or by a computer network, cause the latter to carry out the method according to one of Claims 1 to 8.

11. Computer-readable storage medium comprising instructions that, when executed by a computer or by a computer network, cause the latter to carry out the method according to one of Claims 1 to 8.

## Revendications

1. Procédé informatisé d'évaluation de données de mesure provenant d'une mesure d'une pluralité de pièces (26 ; 36),

   • un ensemble de données de mesure étant associé à chaque pièce (26 ; 36), l'ensemble (M) de données de mesure correspondant à une pluralité de points de mesure des pièces (26 ; 36) et l'ensemble (M) de données de mesure comportant pour chaque point de mesure des pièces (26 ; 36)

      - au moins une coordonnée mesurée et/ou
      - pour chaque coordonnée mesurée un écart par rapport à une coordonnée de comparaison et

   • pour une pluralité d'ensembles (M) de données de mesure, à chaque fois par rapport à une paire de points de mesure qui comprend deux points de mesure des pièces (26 ; 36), une dimension (k) de la corrélation des coordonnées mesurées et/ou des écarts, à chaque fois par rapport à une pluralité de paires de points de mesure étant déterminée sur la pluralité d'ensembles (M) de données de mesure,

**caractérisé en ce que**

des points de mesure qui font partie d'une paire de points de mesure dont la dimension (k) de la corrélation satisfait à une condition de sélection spécifiée, sont associés les uns aux autres et une nuée de points de mesure est formée, un premier point de mesure étant tout d'abord sélectionné ou déterminé pour la nuée, puis d'autres points de mesure étant associés à la nuée avec vérification que la dimension (k) de la corrélation de la paire de points de mesure, qui comprend l'autre point de mesure éventuel et le premier point de mesure, satisfait à une condition d'inclusion relative à l'inclusion de l'autre point de mesure éventuel dans la nuée.

2. Procédé selon la revendication 1, **caractérisé en ce qu'**au moins une partie de la pluralité de pièces (26 ; 36) a la même forme souhaitée.

3. Procédé selon la revendication 1 ou 2, **caractérisé en ce que** la dimension (k) de la corrélation comporte un coefficient de corrélation.

4. Procédé selon l'une des revendications 1 à 3, **caractérisé en ce que** la nuée est représentée graphiquement, des lignes de liaison d'une pluralité d'autres points de mesure de la nuée au premier point de mesure étant représentées avec une représentation ou une représentation partielle de l'une des pièces (26 ; 36) ou d'une forme souhaitée des pièces (26 ; 36).

5. Procédé selon l'une des revendications 1 à 4, **caractérisé en ce que** la nuée est représentée graphiquement, un contour étant généré autour de tous les points de la nuée et la zone située à l'intérieur du contour étant représentée dans une couleur associée à la nuée.

6. Procédé selon l'une des revendications 1 à 5, **caractérisé en ce qu'**un plan d'essai, qui comporte des points de mesure à mesurer pour effectuer la mesure de pièces supplémentaires (26 ; 36), est créé ou modifié avec prise en compte des dimensions déterminées (k) de la corrélation.

7. Procédé selon l'une des revendications 1 à 6, **caractérisé en ce qu'**une distance (D) entre les points de mesure de la paire est déterminée pour une pluralité de paires de points de mesure.

8. Procédé selon la revendication 7, **caractérisé en ce que**, pour la pluralité des paires de points de mesure, la dimension déterminée (k) de la corrélation est représentée graphiquement en fonction de la distance déterminée (D) entre les points de mesure de la paire.

9. Dispositif d'évaluation de données de mesure provenant d'une mesure d'une pluralité de pièces (26 ; 36), notamment pour mettre en œuvre le procédé selon l'une des revendications précédentes, le dispositif comportant au moins un ordinateur de traitement de données et

• un ensemble (M) de données de mesure étant associé à chaque pièce (26 ; 36), l'ensemble (M) de données de mesure correspondant à une pluralité de points de mesure des pièces (26 ; 36) et l'ensemble (M) de données de mesure comportant pour chaque point de mesure des pièces (26 ; 36)

- au moins une coordonnée mesurée et/ou
- pour chaque coordonnée mesurée un écart par rapport à une coordonnée de comparaison et

• l'au moins un ordinateur de traitement de données étant conçu pour déterminer, pour une pluralité d'ensembles) de données de mesure, à chaque fois par rapport à une paire de points de mesure qui comprend deux points de mesure des pièces (26 ; 36), une dimension de la corrélation des coordonnées mesurées et/ou des écarts, à chaque fois par rapport à une pluralité de paires de points de mesure sur la pluralité d'ensembles (M) de données de mesure,

**caractérisé en ce que**

l'ordinateur de traitement de données est conçu pour associer entre eux des points de mesure qui font partie d'une paire de points de mesure dont la dimension (k) de la corrélation satisfait à une condition de sélection spécifiée, et pour former une nuée de points de mesure, un premier point de mesure étant tout d'abord sélectionné ou déterminé pour la nuée, puis d'autres points de mesure étant associés à la nuée avec vérification que la dimension (k) de la corrélation de la paire de points de mesure, qui comprend l'autre point de mesure éventuel et le premier point de mesure, satisfait à une condition d'inclusion relative à l'inclusion de l'autre point de mesure éventuel dans la nuée.

10. Logiciel comprenant des instructions qui, lorsque le programme est exécuté par un ordinateur ou par un réseau informatique, ordonnent à celui-ci de mettre en œuvre le procédé selon l'une des revendications 1 à 8.

**11.** Support de stockage lisible par ordinateur comprenant des instructions qui, lorsqu'elles sont exécutées par un ordinateur ou un réseau informatique, ordonnent à celui-ci de mettre en œuvre le procédé selon l'une des revendications 1 à 8.

Fig. 1

Fig. 2

Fig. 3

Fig. 4

Fig. 5

Fig. 6

Fig. 7

Fig. 8

S1

S2

S3

S4

S5

Fig. 9

S11

S12

S13

S14

Fig. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1679486 A1

- US 20110054835 A1

**In der Beschreibung aufgeführte Nicht-Patentliteratur**

- **DANA EFSTATE et al.** Correlation of CMM Data with Flexible Fixturing. *SAE Technical Paper Series,* 16. Oktober 2001, vol. 1